# DEMANDE DE BREVET EUROPEEN

(11) **EP 4 718 651 A1**
(43) Date de publication de la demande: **01.04.2026**
(21) Numéro de dépôt: 25182234.2
(22) Date de dépôt: 12.06.2025
(51) Int. Cl.: H02G 3/06, B60R 16/02, H02G 3/22

(54) **TERMINAISON DE MAINTIEN POUR UNE GAINE DE PROTECTION**

(30) Priorité: 30.09.2024 FR 2410458
(71) Demandeur: Airbus Helicopters, 13725 Marignane Cedex (FR)
(72) Inventeur: CALABRESE, Bernard, 13004 MARSEILLE (FR); JACQUEMIN, Eric, 13127 VITROLLES (FR)
(74) Mandataire: GPI Brevets

(57) **Abrégé**

La présente invention concerne une terminaison de maintien (30) pour une gaine de protection (10), la terminaison de maintien (30) comprenant un embout (40) creux ayant un tronçon de fixation à connecter à la gaine de protection (10) et un tronçon d'immobilisation (50) solidaire du tronçon de fixation. Le tronçon d'immobilisation (50) comporte au moins deux ouvertures (60), le tronçon d'immobilisation (50) comportant au moins deux parois de séparation (70) séparant chacune deux ouvertures (60) adjacentes, ladite terminaison de maintien (30) comprenant un premier lien de serrage (81) serrant conjointement une paroi de séparation (70) et une liaison filaire (20) traversant l'embout (40) et la gaine de protection (10).

## Description

La présente invention concerne une terminaison de maintien pour une gaine de protection, ainsi qu'un assemblage comprenant cette terminaison de maintien et une telle gaine de protection, et un véhicule comprenant cet assemblage.

Un véhicule peut comprendre des équipements reliés par des liaisons filaires.

L'expression « liaison filaire » désigne par la suite tout moyen de connexion permettant le passage d'informations ou d'énergie, voire de fluide, telle qu'une liaison filaire électrique, une liaison filaire optique, une liaison filaire pneumatique ou une liaison filaire hydraulique par exemple.

A titre illustratif, une liaison filaire peut comprendre au moins un fil électrique, au moins un câble électrique, au moins un tuyau, et/ou au moins une fibre optique.

Une liaison filaire peut être disposée dans une gaine de protection afin d'être protégée d'agressions diverses. Par exemple, la gaine de protection peut prendre la forme d'une gaine annelée ou encore d'une gaine convolutée ou une gaine dite circonvolutée. La liaison filaire traverse alors de part en part la gaine de protection. En revanche, la liaison filaire saille en dehors de la gaine de protection afin de pouvoir être connectée à un autre organe. Dès lors, la liaison filaire est sujette à des frottements avec l'entrée et la sortie de la gaine de protection.

Pour remédier à cet inconvénient, une première solution technique connue consiste à épaissir la liaison filaire à l'aide d'un empilement de gaines thermorétractables, puis à ajouter une dernière gaine thermorétractable qui s'étend sur cet empilement et l'extrémité de la gaine de protection. Cette solution est efficace, mais induit de fait un temps de mise en œuvre et des coûts financier et/ou massique non négligeables.

Une deuxième solution technique propose de visser un embout à chaque extrémité de la gaine de protection. Un tel embout comporte un anneau de protection solidaire d'un cylindre fileté à visser à la gaine de protection. L'embout est alors vissé à la gaine de protection jusqu'à ce que la gaine de protection bute contre l'anneau.

Les documents WO 2014/141935 A1, DE 10 2019 116624 A1, FR 3 087 214 A1, EP 3 713 025 A1 et KR 2023 0032364 A sont aussi connus.

La présente invention a alors pour objet de proposer une terminaison de maintien innovante pour une gaine de protection afin de réduire les risques d'endommagement d'une liaison filaire agencée dans cette gaine de protection.

L'invention vise ainsi une terminaison de maintien pour une gaine de protection protégeant une liaison filaire, la terminaison de maintien comprenant un embout creux délimitant un canal central, l'embout ayant un tronçon de fixation annulaire à connecter à la gaine de protection, par exemple un tronçon de fixation à visser à la gaine de protection, l'embout comprenant un tronçon d'immobilisation solidaire du tronçon de fixation. Le tronçon d'immobilisation peut avoir une forme annulaire et /ou peut être accolé au tronçon de fixation.

Le tronçon d'immobilisation comporte au moins deux ouvertures autour du canal central mettant chacune en communication fluidique le canal central et un milieu situé à l'extérieur de l'embout, le tronçon d'immobilisation comportant au moins deux parois de séparation séparant chacune deux ouvertures adjacentes, ladite terminaison de maintien comprenant un premier lien de serrage pour serrer conjointement une des parois de séparation et une liaison filaire traversant l'embout et la gaine de protection.

Dès lors, la terminaison de maintien comporte un embout innovant. L'embout s'étend longitudinalement d'une section dite par exemple « section d'entrée » ménagée dans le tronçon de fixation jusqu'à une section dite par exemple « section de sortie » ménagée dans le tronçon d'immobilisation, en délimitant un canal central reliant la section d'entrée à la section de sortie. L'embout est en outre muni de perçages formant des ouvertures radiales au regard du canal central, et donc différentes des sections d'entrée et de sortie. Chaque ouverture traverse de part en part l'embout selon une direction allant du canal central au milieu situé à l'extérieur de l'embout.

Un opérateur peut équiper une gaine de protection à l'aide de l'embout selon l'invention. L'opérateur insère à cet effet le tronçon de fixation dans une extrémité de la gaine de protection, par exemple jusqu'à ce que la gaine de protection soit en butée contre le tronçon d'immobilisation. Cette gaine de protection peut être une gaine convolutée, ou encore une gaine dite circonvolutée, ou une gaine annelée par exemple. L'opérateur peut alors faire traverser la gaine de protection et l'embout par une liaison filaire, la liaison filaire pénétrant dans l'embout par une section dite par exemple « section d'entrée », pour la distinguer des autres sections, puis cheminant dans le canal central de l'embout avant d'en sortir par une autre section dite par exemple « section de sortie », pour la distinguer des autres sections. L'opérateur serre alors la liaison filaire contre une paroi de séparation de l'embout avec le premier lien de serrage pour immobiliser la liaison filaire avec l'embout. Un tel premier lien de serrage peut comporter par exemple une frette ou un collier de serrage conventionnel tel qu'un serre-câble ou autres.

Par suite, cette terminaison de maintien innovante tend à limiter les risques de dégradation de la liaison filaire par frottements contre la gaine de protection. La liaison filaire est ainsi protégée et maintenue par la terminaison de maintien, contrairement à un embout conventionnel.

En outre, la terminaison de maintien peut permettre de réduire le temps de mise en œuvre, comparée à une solution nécessitant l'agencement de multiples gaines thermorétractables, et /ou peut avoir des coûts financier et/ou massique relativement faibles.

La terminaison de maintien peut en outre comprendre une ou plusieurs des caractéristiques qui suivent.

Selon une possibilité, les ouvertures peuvent être équiréparties autour du canal central.

Cette caractéristique peut permettre d'immobiliser la liaison filaire en de multiples positions tout autour du canal central.

Selon une possibilité compatible avec les précédentes, les au moins deux ouvertures peuvent comporter quatre ouvertures, les au moins deux parois de séparation peuvent comporter quatre parois de séparation.

Cette caractéristique peut permettre d'immobiliser la liaison filaire en de multiples positions tout autour du canal central.

Selon une possibilité compatible avec les précédentes, ladite terminaison de maintien peut comprendre un second lien de serrage et un support, le second lien de serrage serrant le support et une dite paroi de séparation, le support comprenant une fixation.

Un tel second lien de serrage peut comporter par exemple une frette ou un collier de serrage conventionnel tel qu'un serre-câble ou autres.

Le support peut s'étendre partiellement au droit de l'embout afin que la fixation soit facilement accessible. Par exemple, une telle fixation peut comprendre une plaque percée pouvant être vissée à une structure.

Ainsi, le support peut permettre à la terminaison de maintien de fournir un maintien mécanique supplémentaire à la gaine de protection.

Selon une possibilité compatible avec les précédentes, la terminaison de maintien peut comporter une première collerette et une deuxième collerette de part et d'autre d'un anneau central, l'anneau central comprenant lesdites ouvertures et lesdites parois de séparation.

Chaque paroi de séparation s'étend alors de la première collerette à la deuxième collerette.

Eventuellement, l'anneau central présente un troisième diamètre inférieur à un premier diamètre de la première collerette et à un deuxième diamètre de la deuxième collerette,

L'encombrement de la terminaison de maintien peut être optimisé, au moins une partie du premier lien de serrage pouvant être logé entre les collerettes.

Par exemple, au moins une collerette présente un diamètre sensiblement égal au diamètre de la gaine de protection à équiper.

En présence d'un support tel que décrit précédemment, le support peut être en appui sur la première collerette et la deuxième collerette.

Ainsi, le support est correctement solidarisé à l'embout par le second lien de serrage.

Selon une possibilité compatible avec les précédentes, le tronçon de fixation peut comporter un pas de vis.

Le tronçon de fixation peut alors être vissé à la gaine de protection, éventuellement à l'intérieur de la gaine de protection.

Par ailleurs, l'invention vise aussi un assemblage muni d'une terminaison de maintien tel que décrit précédemment et d'une gaine de protection traversée par une liaison filaire, le tronçon de fixation étant connecté, et par exemple vissé, à la gaine de protection, le premier lien de serrage serrant la liaison filaire à la paroi de séparation.

Eventuellement, la gaine de protection peut être en butée contre le tronçon d'immobilisation.

Un tel assemblage peut être agencé sur n'importe quel système comprenant une liaison filaire disposée dans une gaine de protection.

Par exemple, l'invention vise aussi un véhicule comportant un tel assemblage. Ce véhicule peut être un aéronef, une automobile, un navire, etc.

L'invention et ses avantages apparaîtront avec plus de détails dans le cadre de la description qui suit avec des exemples donnés à titre illustratif en référence aux figures annexées qui représentent :
la figure 1, une vue éclatée d'une terminaison de maintien selon l'invention, et
la figure 2, une vue d'un assemblage selon l'invention.

Les éléments présents dans plusieurs figures distinctes sont affectés d'une seule et même référence.

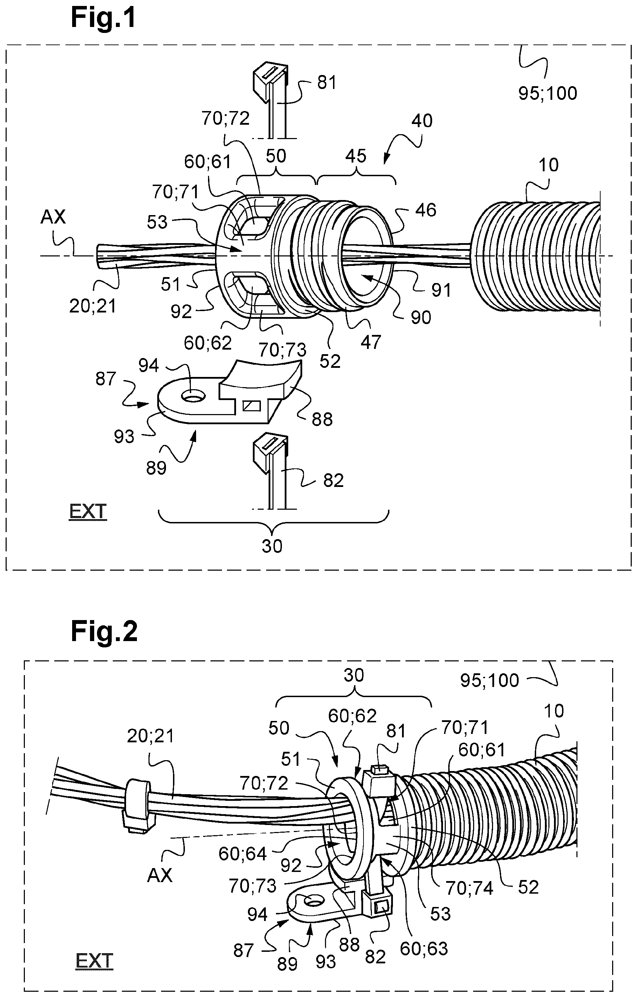

La figure 1 présente un assemblage 95 ayant une gaine de protection 10 traversée par une liaison filaire 20. La gaine de protection peut être une gaine convolutée ou une gaine annelée par exemple. Selon l'exemple donné, cette liaison filaire 20 peut comprendre un ou plusieurs fils électriques 21. Cependant, la liaison filaire 20 peut comprendre alternativement ou en complément au moins un câble, au moins une fibre optique, au moins un tuyau.

L'assemblage 95 peut être disposé au sein de tout type de système, et par exemple au sein d'un véhicule, voire en particulier au sein d'un aéronef.

Indépendamment de ces aspects, un tel assemblage 95 comporte une terminaison de maintien 30 selon l'invention. Un exemple de cette terminaison de maintien 30 est montré sous une forme éclatée sur la figure 1, et un autre exemple est montrée sous une forme assemblée sur la figure 2.

Quelle que soit la réalisation et en référence à la figure 1, une telle terminaison de maintien 30 comprend un embout 40 délimitant un canal central 90. Le canal central 90 s'étend selon sa longueur, par exemple le long d'un axe AX de symétrie, d'une section d'entrée 91 de l'embout à une section de sortie 92 de l'embout.

L'embout 40 comprend un tronçon de fixation 45 solidaire d'un tronçon d'immobilisation 50 qui sont éventuellement de forme annulaire pour délimiter le canal central 90.

Le tronçon de fixation 45 a pour fonction de connecter l'embout 40 à la gaine de protection 10. Le tronçon de fixation 45 comporte dès lors la section d'entrée 91. Ce tronçon de fixation 45 peut être de forme annulaire et poussé dans la gaine de protection 10. Ce tronçon de fixation 45 peut avoir la forme d'un cylindre de révolution.

Le tronçon de fixation 45 peut comprendre un pas de vis pour être vissé à la gaine de protection 10. Ainsi, le tronçon de fixation 45 illustré comporte un cylindre 46 portant un filet 47 formant un pas de vis apte à être vissé à la gaine de protection 10. Le cylindre 46 peut comprendre un chanfrein au niveau de la section d'entrée de l'embout.

Le tronçon d'immobilisation 50 prolonge le tronçon de fixation 45, par exemple selon l'axe AX. Eventuellement le tronçon d'immobilisation peut être droit ou coudé. Le tronçon d'immobilisation 50 comporte la section de sortie 92. Le tronçon d'immobilisation 50 peut être de forme annulaire. Par exemple, le tronçon d'immobilisation 50 et le tronçon de fixation 45 sont concentriques.

Par ailleurs, le tronçon d'immobilisation 50 comporte au moins deux ouvertures 60 situées autour du canal central 90, et par exemple entre les sections d'entrée et de sortie. Chaque ouverture met en communication fluidique le canal central 90 et un milieu EXT situé à l'extérieur de l'embout et de la gaine de protection. La référence 60 désigne n'importe quelle ouverture, les référence 61 à 64 désignant des ouvertures particulières si besoin.

De plus, le tronçon d'immobilisation 50 comporte au moins deux parois de séparation 70, chaque paroi de séparation 70 sépare deux ouvertures 60 adjacentes selon une direction tangente au canal central. La référence 70 désigne n'importe quelle paroi de séparation, les référence 71 à 74 désignant des parois de séparation particulières si besoin.

Eventuellement, les ouvertures 60 et/ou les parois de séparation 70 sont équiréparties autour du canal centrale 90.

Selon les exemples des figures 1 et 2, l'embout 40 comprend quatre ouvertures 61, 62, 63, 64, et dès lors quatre parois de séparation 71, 72, 73, 74.

Les ouvertures 60 peuvent être disposées dans un anneau central 53 du tronçon d'immobilisation 50, cet anneau central 53 étant disposé entre une première collerette 51 comprenant la section de sortie 51 et une deuxième collerette 52 du tronçon d'immobilisation 50. Chaque paroi de séparation 71, 72, 73, 74 comprend alors une extrémité connectée à la première collerette 51 et une autre extrémité connectée à la deuxième collerette 52.

La deuxième collerette 52 est alors accolée au tronçon de fixation 45 et peut faire office de butée pour la gaine de protection 10.

Selon l'exemple de la figure 1, l'anneau central 53 présente un troisième diamètre externe égal à un premier diamètre externe de la première collerette 51 et à un deuxième diamètre externe de la deuxième collerette 52. Autrement dit, le tronçon d'immobilisation 50 a la forme d'un cylindre de révolution percé radialement.

Selon l'exemple de la figure 2, l'anneau central 53 a un troisième diamètre inférieur à un premier diamètre de la première collerette 51 et à un deuxième diamètre de la deuxième collerette 52.

Par ailleurs et en référence à la figure 2 par exemple, la terminaison de maintien 30 comprend en outre un premier lien de serrage 81. En utilisation, le premier lien de serrage 81 traverse deux ouvertures 61, 62 adjacentes pour serrer conjointement la paroi de séparation 71 associée et la liaison filaire 20 traversant l'embout 40 et la gaine de protection 10. La liaison filaire 20 est ainsi immobilisée par rapport à la gaine de protection 10 au niveau de l'embout 40.

Selon une possibilité, la terminaison de maintien 30 peut comprendre un système de maintien additionnel pour immobiliser la gaine de protection 10 et la liaison filaire 20 par rapport à une structure porteuse.

Ainsi, la terminaison de maintien 30 peut comprendre un second lien de serrage 82 solidarisant un support 89 au tronçon d'immobilisation 50. En particulier, le second lien de serrage 82 peut traverser deux ouvertures 63, 64 pour serrer conjointement une paroi de séparation 74 et le support 89.

Par exemple, le support 89 peut comprendre une base 88 conformée à la première collerette 51 et à la deuxième collerette 52 pour être accolé contre cette première collerette 51 et cette deuxième collerette 52. Eventuellement, la base 88 peut comprendre un perçage pouvant être traversé par le second lien de serrage 82.

En outre, le support 89 peut comprendre une fixation 87 pour fixer le support 89 à une structure porteuse. Par exemple, une telle fixation 87 comporte une plaque 93 solidaire de la base 88. Cette plaque 93 est favorablement percée afin de pouvoir présenter un orifice 94 permettant une solidarisation par vissage par exemple à la structure porteuse.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Terminaison de maintien (30) pour une gaine de protection (10) protégeant une liaison filaire, la terminaison de maintien (30) comprenant un embout (40) creux délimitant un canal central (90), l'embout (40) ayant un tronçon de fixation (45) annulaire à connecter à la gaine de protection (10), l'embout (40) comprenant un tronçon d'immobilisation (50) solidaire du tronçon de fixation (45),
**caractérisée en ce que** le tronçon d'immobilisation (50) comporte au moins deux ouvertures (60) autour du canal central mettant chacune en communication fluidique le canal central (90) et un milieu (EXT) situé à l'extérieur de l'embout, le tronçon d'immobilisation (50) comportant au moins deux parois de séparation (70) séparant chacune deux ouvertures (60) adjacentes, ladite terminaison de maintien (30) comprenant un premier lien de serrage (81) pour serrer conjointement une dite paroi de séparation (70) et une liaison filaire (20) traversant le canal central de l'embout (40) et la gaine de protection (10).

2. Terminaison de maintien selon la revendication 1,
**caractérisée en ce que** lesdites ouvertures (60) sont équiréparties autour du canal central (90).

3. Terminaison de maintien selon l'une quelconque des revendications 1 à 2,
**caractérisée en ce que** les au moins deux ouvertures (60) comportent quatre ouvertures (61, 62, 63, 64), les au moins deux parois de séparation (70) comportant quatre parois de séparation (71, 72, 73, 74).

4. Terminaison de maintien selon l'une quelconque des revendications 1 à 3,
**caractérisée en ce que** ladite terminaison de maintien (30) comprend un second lien de serrage (82) et un support (89), le second lien de serrage (82) serrant le support (89) et une dite paroi de séparation (70), le support (89) comprenant une fixation (87).

5. Terminaison de maintien selon l'une quelconque des revendications 1 à 4,
**caractérisée en ce que** ladite terminaison de maintien (30) comporte une première collerette (51) et une deuxième collerette (52) de part et d'autre d'un anneau central (53), l'anneau central (53) comprenant lesdites ouvertures (60) et lesdites parois de séparation (70).

6. Terminaison de maintien selon les revendications 4 et 5,
**caractérisée en ce que** le support (89) est en appui sur la première collerette (51) et la deuxième collerette (52).

7. Terminaison de maintien selon l'une quelconque des revendications 5 à 6,
**caractérisée en ce que** l'anneau central (53) présente un troisième diamètre inférieur à un premier diamètre de la première collerette (51) et à un deuxième diamètre de la deuxième collerette (52).

8. Terminaison de maintien selon l'une quelconque des revendications 1 à 7,
**caractérisée en ce que** le tronçon de fixation (45) comporte un pas de vis (47).

9. Assemblage (95) muni d'une terminaison de maintien (30) et d'une gaine de protection (10) traversée par une liaison filaire (20), **caractérisé en ce que** la terminaison de maintien (30) est selon l'une quelconque des revendications 1 à 8, le tronçon de fixation (45) étant connecté à la gaine de protection (10), le premier lien de serrage (81) serrant la liaison filaire (20) à la paroi de séparation (70).

10. Assemblage selon la revendication 9,
**caractérisé en ce que** la gaine de protection (10) est en butée contre le tronçon d'immobilisation (50).

11. Véhicule (100),
**caractérisé en ce que** le véhicule (100) comporte un assemblage (95) selon l'une quelconque des revendications 9 à 10.
